Europäisches Patentamt

European Patent Office    (11) Publication number: **0 307 095**

Office européen des brevets    **A2**

## (12) EUROPEAN PATENT APPLICATION

(21) Application number: 88307539.2

(22) Date of filing: 15.08.88

(51) Int. Cl.⁴: **G11B 7/00 , G11B 7/08 , G11B 7/12**

(30) Priority: **05.09.87 GB 8720924**

(43) Date of publication of application:
**15.03.89 Bulletin 89/11**

(84) Designated Contracting States:
**AT BE CH DE ES FR GB GR IT LI LU NL SE**

(71) Applicant: **THORN EMI plc**
**4 Tenterden Street**
**London W1R 9AH(GB)**

(72) Inventor: **Baker, Brian John**
**109, Lent Rise Road**
**Burnham Buckingshamshire(GB)**
Inventor: **Dean, Terence Francis**
**54, Sharps Lane**
**Ruislip Middlesex, HA4 7JQ(GB)**

(74) Representative: **Marsh, Robin Geoffrey et al**
**Thorn EMI Patents Limited The Quadrangle**
**Westmount Centre Uxbridge Road**
**Hayes Middlesex, UB4 0HB(GB)**

(54) **Helical scan recording.**

(57) A helical scan optical system comprises, in coaxial disposition, a drum around which a tape is helically wrapped and an optical image rotator. The rotator is disposed inside the drum and both the drum and the rotator are coupled to respective hollow, coaxial drive shafts. The optical axis of the system passes coaxially along the two drive shafts.

FIG.1

EP 0 307 095 A2

## HELICAL SCAN RECORDING

The present invention relates to helical scan optical recording and replay systems.

Our published European Patent Application No. 0263656 describes a multiple beam helically scanned optical tape recording system in which a rotating drum includes an axially mounted pivoted galvanometer mirror for the control of tracking and in which an optical image rotator, external to the drum, is provided in order that there is no rotation of the focussed image representing writing and reading data spots and constant track to track spacing is preserved. In an alternative embodiment , a vertically movable mirror and objective lens assembly is mounted in the drum for tracking control. Our Bristish Patent Application No. 8720923 describes a form of modified Pechan image rotator which is particularly suitable for use in such a system. Such systems require the rotational axes of the rotator and of the drum to be precisely aligned in relationship to their associated optical paths and this precise alignment can be difficult to achieve and maintain. Furthermore, in such systems, it is necessary to apply suitable control signals to the movable mirror assembly, and in order to achieve this it is usual to provide electrical coupling means such as a slip ring or inductive coupler to the drive shaft of the drum.

It is an object of the present invention to provide an improved multiple beam helical scan optical recording system in which the aforementioned difficulty of alignment is eased. It is an additional object to provide such a system in which no electrical connections to the drum are required.

In accordance with the present invention a drum and an optical rotator, for a helical scan optical recording and reading system, share a common rotational axis, and, preferably also, a common optical axis.

The present invetion also provides a helical scan optical recording and reading system incorporating a drum and optical rotator which share a common rotational axis. The present invention also provides: recording equipment for such a system; reading equipment for such a system; and recording and reading equipment for such a system.

The inveniton will now be described, by way of example only, with reference to the accompanying drawings in which:-

Figure 1 is a perspective view of an integrated helical scanning drum and optical rotator assembly, shown partly in section.

Figure 2 is a schematic diagram showing a first embodiemnt of a multiple beam helically scanned optical tape recording system including the assembly of Figure 1.

Figure 3 is a schematic diagram showing a second embodiment of a multiple beam helically scanned optical tape recording system including the assembly of Figure 1.

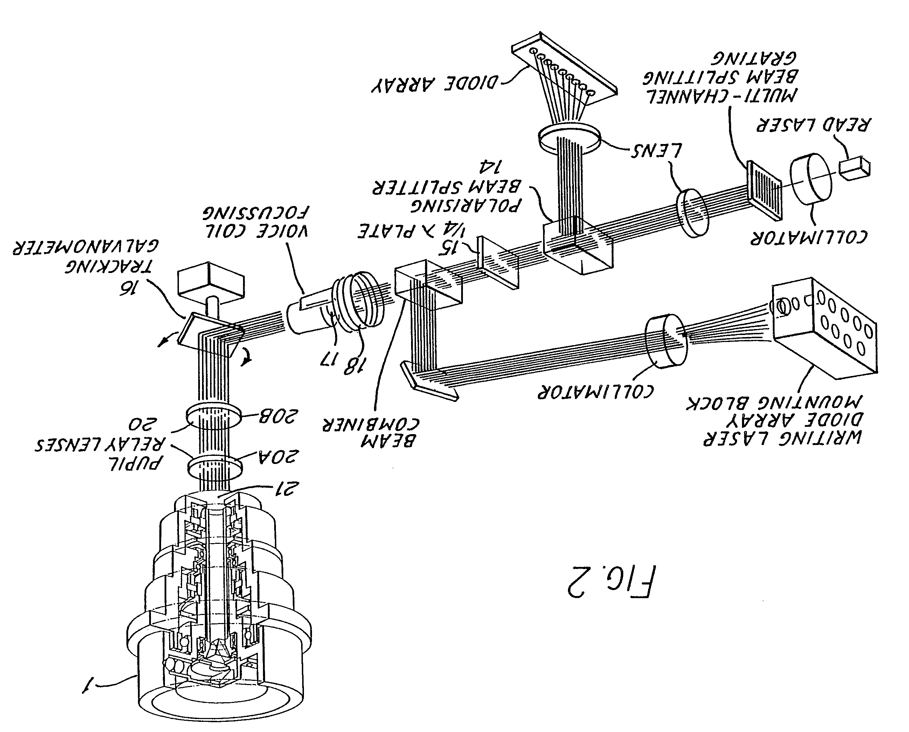

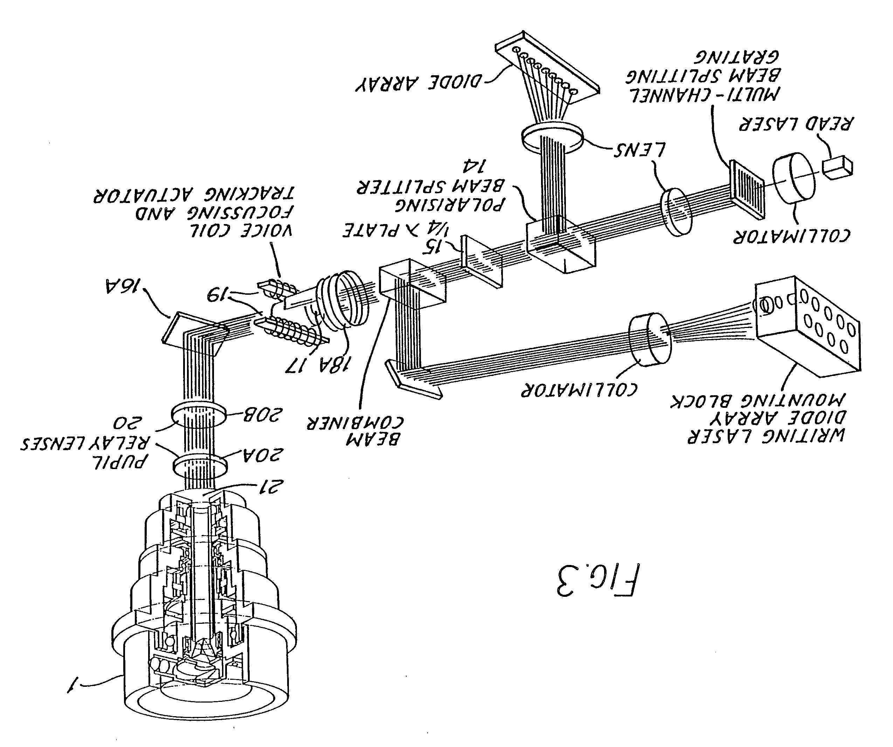

Figures 2 and 3 each show multiple beam recording and replay systems which incorporate generally similar optical components to the multiple beam system described in our aforementioned European Patent Application, and the components operate in a generally similar manner, using similar control circuitry, with the principal exceptions that the drum includes an axially mounted deflection mirror which is a fixed position relative to the drum rather than controllably pivoted and/or vertically movable, and the optical rotator and the drum are integrated into a single co-axial assembly, to share a common optical and rotational axis. In each embodiment, tracking control for write and read beams is provided by beam deflection means provided in the main optical path exterior to the drum.

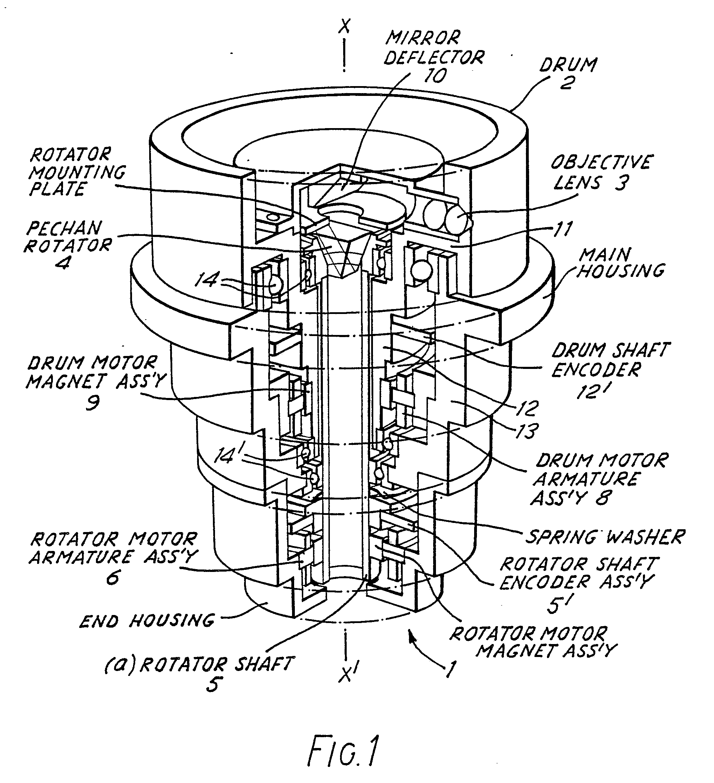

Referring to Figure 1, the integrated rotatable drum and optical rotator assembly 1 includes a helical scanning drum 2 having a fixed final objective lens assembly 3 mounted above an annular platform 11 in a manner generally similar to the arrangement shown in the aforementioned European Patent Application. The drum is provided with a downwardly extending hollow drive shaft 12. An optical rotator 4 is assembled coaxiallay with the drum, to rotate independently of the drum about the axis XX'. The rotator 4 is fixed to the upper end of a hollow drive shaft 5 situated co-axially inside the drum drive shaft 12. The drive shaft 5 is driven by a rotator motor having armature and magnet assemblies 6 and 7 respectively mounted close to its lower end. The drum 2 is driven by a drum motor having co-axial armature and magnet assemblies, 8 and 9 respectively, mounted close to the central region of the rotator drive shaft 5. The magnet assemblies are mounted to their respective drive shafts, while the armatures are non-rotating and no rotating coils or leads are required. A mirror deflector 10 tilted at 45° to the axis XX' is fixed in the upper region of the drum in a axial position such that substantially axially directed write and read light beams entrant from the assembly are deflected through the objective lens system 3, to be focussed on the surface of recording tape helically wrapped around the drum surface. The drum and rotator shafts 12 and 5 are each provided with a shaft encoder, 12' and 5' respectively, such that, during writing and reading, the drum and the Pechan rotator motors may be controlled to rotate with a rotational speed ratio of 2:1, with their relative phases controlled in similar manner to the arrangement disclosed in the aforementioned Bristish Patent Application. An outer main housing 13 is fixed to the deck plate of the optical recorder, and bearings such as are shown at 14 and 14' are provided to permit independent coaxial rotation of the drum and of the rotator relative to the housing. The drum 2 and the drum shaft 12 may be or a unitary construction. The drum, drum shaft, rotator shaft and main housing may be suitably metallic or, alternatively, of a moulded plastics material.

The reading systems shown in Figures 2 and 3 both use polarising optics, i.e. a polarising beam splitter 14 and a quarter-wave plate 15, for which a preferred form of optical rotator is a modified form of Pechan rotator having internal phase-retardation coatings, such as is described in the aforementioned British Patent Application. A conventional Pechan rotator may be suitably used, however, if the read optics are non-polarising and use, e.g., a half-silvered mirror in place of the polarising beam splitter and quarter wave plate.

Figures 2 and 3 show alternative means of adjusting beam deflection to control the tracking of write and read light beams. Figure 2 shows a pivoted tracking galvanometer mirror 16 positioned between a dynamic focussing lens 17 whose focus is controlled by a voice-coil actuator 18. The arrangement of Figure 3 uses a fixed deflection mirror 16A in place of the galvanometer mirror 16 and tracking control is provided by a two-dimensional actuator having a pair of lateral deflection coils 19 in addition to a voice-coil focussing coil 18A. Similar actuators for focus and tracking control are used in optical disc recording technology, and are described, for example in "Principles of Optical Disc Systems" by G. Bouwhuis et al, published by Adam Hilger, 1985.

A pair of fixed pupil relay lenses 20A, 20B, is provided in both the Figure 2 and Figure 3 embodiments, close to the final relay lens 20a being constructed close to the axial entry aperture 21 provided in the drum.

An intermediate image plane is created by the optical system which acts as a secondary object plane for the pupil relay lenses, enabling a movement ratio between the focussing lens 17 and the final focussed image at the tape surface ·to be close to 1:1, thereby minimising power requirements for the voice-coil actuator 18 or 18A and, in the embodiment of Figure 3, for the tracking actuator 19.

If desired, the focussing lens 17 may be included as part of the pupil relay arrangement 20a and 20b, thus forming a low aberration pupil relay arrangement by constructing, the relay as a pair and moving one element, i.e. the focussing lens. The intermediate usage plane is then formed between the two elements.

The Pechan rotator provides a correcting effect to image rotation generated by the rotation of the drum, when suitably controlled in rotational frequency and relative phase as is described in the aforementioned European Patent Application.

The invention provides a multi-channel optical recording system having a physically compact integrated rotator and drum assembly. This assembly may be manufactured at low cost using readily assembled moulded plastics components, and has the advantages that the rotating drum includes no actuated optical components and that no electrical connections to rotating components are required.

Further alternative embodiments of the invention will be apparent to those skilled in the art.

The terms "optical" and "light" as used herein are not intended to be limited to electromagnetic radiation in the visible range of wavelengths but are intended to embrace electromagnetic radiation of other wavelengths, such as infra-red radiation, which can be handled, insofar as the invention is concerned, in a similar way to radiation in the visible range of wavelengths.

## Claims

1. A helical scan optical recording and reproducing system including a rotatable drum, arranged to receive tape wrapped helically therearound, and an optical image rotator disposed to compensate for undesired motion, relative to the tape, of information to be recorded thereon or reproduced therefrom, said optical image rotator being mounted within said drum and coaxially rotatable relative thereto.

2. A system according to Claim 1 wherein the optical axes of said drum and said optical image rotator are substantially coincident.

3. A system according to either Claim 1 or Claim 2 wherein said optical image rotator comprises a Pechan prism assembly.

4. A system according to any preceding Claim wherein said drum and said optical image rotator are coupled to respective hollow, coaxial drive shafts and wherein bearing means are provided to permit said shafts to rotate relative to one another.

5. A system according to Claim 4 including respective drive means coupled to said shafts.

6. A system according to Claims 3 and 5 wherein said respective drive means are arranged to rotate said drum at twice the speed of said optical image rotator.

7. A system according to any preceding Claim including an axially mounted deflection mirror fixed within the drum and arranged to direct light incident thereon by way of said optical image rotator through objective lens means and through said drum to said tape and to likewise direct light reflected from said tape back through said optical image rotator.

X
MIRROR DEFLECTOR 10
DRUM 2
ROTATOR MOUNTING PLATE
OBJECTIVE LENS 3
11
PECHAN ROTATOR 4
MAIN HOUSING
14
DRUM MOTOR MAGNET ASS'Y 9
DRUM SHAFT ENCODER 12'
12
13
14'
DRUM MOTOR ARMATURE ASS'Y 8
ROTATOR MOTOR ARMATURE ASS'Y 6
SPRING WASHER
ROTATOR SHAFT ENCODER ASS'Y 5'
END HOUSING
ROTATOR MOTOR MAGNET ASS'Y
(a) ROTATOR SHAFT 5
X'
1

FIG.1

FIG. 2

WRITING LASER DIODE ARRAY MOUNTING BLOCK

COLLIMATOR

BEAM COMBINER

1

21

20A

PUPIL RELAY LENSES 20

20B

18 17

COLLIMATOR

READ LASER

MULTI-CHANNEL BEAM SPLITTING GRATING

LENS

15
1/4 λ PLATE

POLARISING BEAM SPLITTER 14

VOICE COIL FOCUSSING

16 TRACKING GALVANOMETER

DIODE ARRAY

EP 0 307 095 A2

FIG. 3

WRITING LASER DIODE ARRAY MOUNTING BLOCK

COLLIMATOR

BEAM COMBINER

21

20A

PUPIL RELAY LENSES 20

20B

18A 17

19

16A

COLLIMATOR

15
1/4 λ PLATE

VOICE COIL FOCUSSING AND TRACKING ACTUATOR

READ LASER

LENS

POLARISING BEAM SPLITTER 14

MULTI-CHANNEL BEAM SPLITTING GRATING

DIODE ARRAY

EP 0 307 095 A2